# EUROPEAN PATENT APPLICATION

(11) **EP 3 591 450 A1**
(43) Date of publication of application: **08.01.2020**
(21) Application number: 18761969.7
(22) Date of filing: 19.01.2018
(51) Int. Cl.: G02B 6/44, G02B 6/02, G02B 6/036

(54) **OPTICAL FIBER**

(30) Priority: 03.03.2017 JP 2017040540
(71) Applicant: Sumitomo Electric Industries, Ltd., Osaka-shi, Osaka 541-0041 (JP)
(72) Inventor: TAMURA, Yoshiaki, Yokohama-shi. Kanagawa 244-8588 (JP); SOHMA, Kazuyuki, Yokohama-shi, Kanagawa 244-8588 (JP); HASEGAWA Takemi, Yokohama-shi, Kanagawa 244-8588 (JP)
(74) Representative: Hoffmann Eitle
(86) International application number: PCT/JP2018/001556
(87) International publication number: WO 2018/159146

(57) **Abstract**

An optical fiber according to an embodiment comprises, as a structure suitable for large capacity transmission over a long haul, a core, a cladding having an outer diameter of 80 µm or more and 130 µm or less, a primary coating, and a secondary coating having elasticity higher than that of the primary coating and an outer diameter of 210 µm or less. The optical fiber having the structure as described above has an MFD of 10 µm or more at a wavelength of 1550 nm, a cable cutoff wavelength longer than 1260 nm, and a microbending loss of 0.6 dB/km or less at a wavelength of 1550 nm.

## Description

### Technical Field

The present invention relates to optical fibers.

### Background Art

The amount of information to be transmitted in an optical communication network is increasing, and there is a demand for increasing the capacity of the optical communication network. In an optical communication network, the transmission capacity of an optical fiber used as a transmission line is limited due to a nonlinear limit. In view of this, studies have been made on an optical fiber having a larger effective area so that the increase in nonlinearity can be suppressed.

In addition, in order to increase the transmission capacity per optical cable, the increase in the number of cores of the optical fibers included in the optical cable is also considered. The number of cores in an optical fiber may be simply increased by increasing the outer diameter of the optical fiber. This is disadvantageous due to problems such as limitation imposed by the diameters of existing ducts and increase in the installation cost.

The transmission capacity can be effectively increased without significantly increasing the outer diameter of the optical cable with the following technique. Specifically, the outer diameter of each of the optical fibers to be accommodated in the optical cable may be reduced so that a large number of optical fibers can be accommodated in the optical cable with a higher spatial density. An optical fiber generally has a structure in which glass having a structure for guiding light is coated with a resin. The outer diameter of the resin coating is typically 250 µm. It would be advantageous to set the outer diameter of the resin coating of the optical fiber to be 200 µm, so that the density of the optical fiber per unit cross-sectional area can be increased by about 150%. In the present specification, unless otherwise specified, the "outer diameter" refers to the diameter of the outermost circumference of a target area in the cross section of the optical fiber (the plane orthogonal to the fiber axis).

The optical fiber described in Patent Document 1 has a small primary coating resin layer with a thin outer diameter of 210 µm or less, and with a modulus of elasticity (hereinafter referred to as "in situ elastic modulus") in an optical fiber state of 0.5 MPa or more. Thus, the optical fiber described in Patent Document 1 can achieve a lower microbending loss. Such an optical fiber has a mode field diameter (hereinafter referred to as "MFD") of 8.6 µm to 9.5 µm at a wavelength of 1310 nm. The range of this MFD is the range recommended in ITU-T G.652. Many general-purpose single mode fibers (hereinafter referred to as "SMF") have MFD within this range. Such a range in the MFDs results in a trade-off that a larger MFD leads to a larger microbending loss and a smaller MFD leads to a higher risk of connection loss due to axis offset.

The optical fiber described in Patent Document 2 has a primary coating resin layer with a thin outer diameter of 220 µm and with an in situ elastic modulus smaller than 0.5 MPa, and a secondary coating layer having a Young's modulus larger than 1500 MPa. Thus, the optical fiber described in Patent Document 2 features an even smaller microbending loss and MFD larger than 9 µm at a wavelength of 1310 nm. As described in paragraph "0002" of Patent Document 2, the MFD of a standard SMF is 9.2 µm. Thus, an optical fiber having an MFD of about 9 µm only has a small mismatch with the standard SMF in MFD, and thus involves a small connection loss.

### Citation List

### Patent Literature

Patent Document 1: US Patent No. 9,244,220
Patent Document 2: US Patent Application Laid-Open No. 2014/0308015
Patent Document 3: Japanese Patent Application Laid-Open No. 2001-328851

### Non Patent Literature

Non-Patent Document 1: J. F. Libert et al., "THE NEW 160 GIGABIT WDM CHALLENGE FOR SUBMARINE CABLE SYSTEM", Proceedings of IWCS (International Wire & Cable Symposium) 1998, pp. 375-383

### Summary of Invention

### Technical Problem

The inventors found out the following problems as a result of examining the above-mentioned prior art. Specifically, since the optical fibers described in Patent Documents 1 and 2 have a small MFD of about 10 µm at a wavelength of 1550 nm, the transmission capacity over long haul is low. In large capacity transmission over a long haul using an optical amplifier, transmission capacity is limited by nonlinear noise in the optical amplifier. Since this nonlinear noise decreases in inverse proportion to the fourth power of the MFD, it is desirable to increase the MFD. It is desirable to increase the transmission capacity per optical fiber by reducing nonlinear noise, and to increase the transmission capacity of the optical cable by increasing the spatial density in the optical cable (reducing the outer diameter of each optical fiber to be accommodated). However, a solution to achieve such an optical fiber is disclosed in none of the above-mentioned prior arts.

A smaller glass outer diameter and coating outer diameter of the optical fiber results in more microbending loss, which is a loss due to minute bending of the glass. Furthermore, a smaller glass diameter leads to the coating being more difficult to hold, resulting in a higher risk of the coating remaining in an operation of removing the coating with a remover deterioration of workability).

The present invention has been made to solve the problems as described above, and it is an object of the present invention to provide an optical fiber having a structure suitable for large capacity transmission over a long haul.

### Solution to Problem

An optical fiber according to the present invention comprises a core, a cladding, a primary coating, and a secondary coating. The core extends along a fiber axis and is comprised of silica glass. The cladding extends along the fiber axis while surrounding the core and is comprised of silica glass. Furthermore, the cladding has a refractive index lower than that of the core, and has an outer diameter of 80 µm or more and 130 µm or less on a cross section of the optical fiber orthogonal to the fiber axis. The primary coating extends along the fiber axis while surrounding the cladding and is comprised of an ultraviolet cured resin. The secondary coating extends along the fiber axis while surrounding the primary coating and is comprised of an ultraviolet cured resin having elasticity higher than that of the primary coating. Furthermore, the secondary coating has an outer diameter of 210 µm or less on the cross section of the optical fiber. In the structure as described above, the optical fiber has an MFD (mode field diameter) of 10 µm or more at a wavelength of 1550 nm and a cable cutoff wavelength longer than 1260 nm. Furthermore, the microbending loss measured by a mesh bobbin test defined in IEC TR62221 is 0.6 dB/km or less at a wavelength of 1550 nm.

### Advantageous Effects of Invention

According to the present invention, an optical fiber suitably used for large capacity transmission over a long haul is provided.

### Brief Description of Drawings

Fig. 1 is a diagram showing a cross-sectional structure of an optical fiber 1.
Fig. 2 is a diagram showing an example of the refractive index profile of the optical fiber 1.
Fig. 3 is a graph showing the relationship between microbending loss and glass outer diameter.
Fig. 4 is a graph showing the relationship between microbending loss and primary coating thickness.
Fig. 5 is a table showing the tendency of microbending loss with respect to the primary coating diameter and secondary coating diameter.
Fig. 6 is a table showing the relationship between the in situ elastic modulus of the primary coating and the upper limit Aeff at which the microbending loss is 0.6 dB/km or less.

### Description of Embodiments

### [Description of Embodiments of the Present Invention]

First, the contents of embodiments of the present invention will be individually listed and described.
(1) As one aspect, an optical fiber according to the present embodiment comprises a core, a cladding, a primary coating, and a secondary coating. The core extends along a fiber axis and is comprised of silica glass. The cladding extends along the fiber axis while surrounding the core and is comprised of silica glass. Furthermore, the cladding has a refractive index lower than that of the core, and has an outer diameter of 80 µm or more and 130 µm or less on a cross section of the optical fiber orthogonal to the fiber axis. The primary coating extends along the fiber axis while surrounding the cladding and is comprised of an ultraviolet cured resin. The secondary coating extends along the fiber axis while surrounding the primary coating and is comprised of an ultraviolet cured resin having elasticity higher than that of the primary coating. Furthermore, the secondary coating has an outer diameter of 210 µm or less on the cross section of the optical fiber. The core may include a plurality of regions having different refractive indexes (for example, an inner core and an outer core). Similarly, the cladding may also include a plurality of regions having different refractive indexes (for example, an inner cladding and an outer cladding). In the structure as described above, the optical fiber has an MFD of 10 µm or more at a wavelength of 1550 nm, a cable cutoff wavelength longer than 1260 nm, and a microbending loss of 0.6 dB/km or less at a wavelength of 1550 nm. The microbending loss is measured by the mesh bobbin test defined in IEC TR62221. It is preferable to have a smaller microbending loss.
(2) As one aspect of the present embodiment, on the cross section of the optical fiber, the thickness of the primary coating is preferably larger than the thickness of the secondary coating. Specifically, the thickness of the primary coating is preferably 15 µm or more, and the thickness of the secondary coating is preferably 10 µm or more.
(3) As one aspect of the present embodiment, the in situ elastic modulus of the primary coating is preferably 0.7 MPa or less, and the Young's modulus of the secondary coating is preferably 700 MPa or more. In one aspect of the present embodiment, the in situ elastic modulus of the primary coating may be 0.3 MPa or less, and the Young's modulus of the secondary coating may be 900 MPa or more.
(4) As one aspect of the present embodiment, the core may be substantially free of GeO₂, the concentration of transition metal impurities contained in the core may be 1 mol ppb or less, and the optical fiber may have a transmission loss lower than 0.17 dB/km at a wavelength of 1550 nm. The phrase "substantially free of GeO₂" herein means that the concentration of GeO₂ is less than 0.2 wt% (an increase in the relative refractive index difference is less than 0.01%).
(5) As one aspect of the present embodiment, on the cross section of the optical fiber, the outer diameter of the cladding is preferably 124 µm or more and 126 µm or less, the outer diameter of the primary coating is preferably 156 µm or more and 180 µm or less, and the thickness of the primary coating is preferably larger than the thickness of the secondary coating.
(6) As one aspect of the present embodiment, the cladding may include an inner cladding extending along the fiber axis while being adjacent to the core and an outer cladding extending along the fiber axis while surrounding the inner cladding. In this case, the outer cladding preferably has a lower refractive index than the core, and the inner cladding preferably has a lower refractive index than the outer cladding.
(7) As one aspect of the present embodiment, the glass-transmission temperature Tg of the secondary coating is preferably 60°C to 90°C. In this case, an ultraviolet cured resin having a Tg of - 60°C to -40°C is particularly effective as the primary coating in the configuration to which the ultraviolet cured resin is applied. That is, with a coating structure in which a primary coating having a Tg of -60°C to -40°C is covered by a secondary coating having a Tg of more than 90°C, the difference in Tg between the coatings is large, and thus residual stress in the structure is large. When an optical fiber having such a coating structure is installed in a low temperature environment, air bubbles are likely to be generated in the coating structure. By contrast, with a coating structure in which a primary coating having a Tg of -60°C to -40°C is covered by a secondary coating having a Tg lower than 60°C, when an optical fiber having such a coating structure is installed in a high temperature environment, the Young's modulus of the coating structure lowers. That is, the lateral pressure characteristics of the optical fiber are degraded.

Each aspect listed in this section [Description of Embodiments of the Present Invention] is applicable to each of the other aspects or to any combination of the other aspects.

### [Details of Embodiments of the Present Invention]

Hereinafter, a specific structure of an optical fiber according to the present embodiment will be described in detail with reference to the attached drawings. The present invention is not limited to these exemplifications, but is defined by the claims, and is intended to include all modifications within the scope and meaning equivalent to the claims. Furthermore, in the description of the drawings, the same elements will be denoted by the same reference signs, and overlapping descriptions will be omitted.

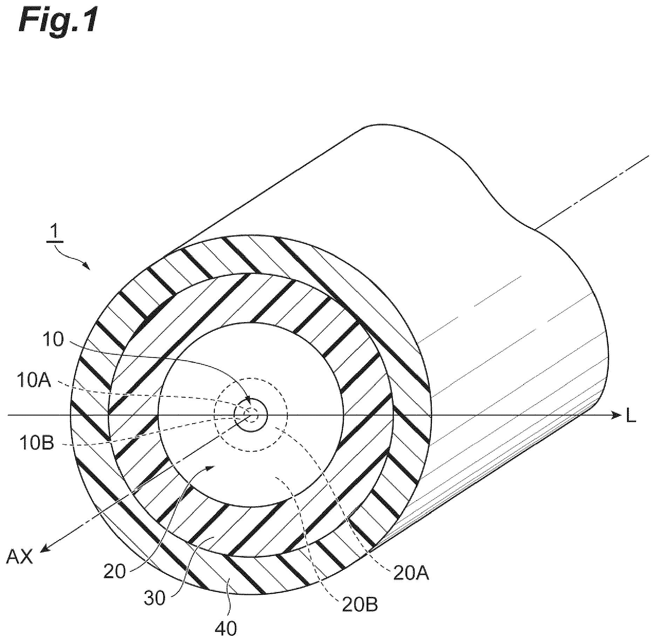

Fig. 1 is a diagram showing the cross-sectional structure of an optical fiber 1 according to the present embodiment, and the cross section shown in Fig. 1 is a cross section of the optical fiber 1 orthogonal to a fiber axis AX corresponding to the central axis of the optical fiber 1. The optical fiber 1 comprises a core 10, a cladding 20, a primary coating 30, and a secondary coating 40, each extending along the fiber axis AX. As described later, the core 10 may be formed of a plurality of glass regions having different refractive indexes, for example, an inner core 10A and an outer core 10B. Similarly, the cladding 20 may also be formed of a plurality of glass regions having different refractive indexes, for example, an inner cladding 20A and an outer cladding 20B.

The core 10 and the cladding 20 are comprised of silica glass. The cladding 20 surrounds the outer circumferential surface of the core 10 along the fiber axis AX, and has a lower refractive index than the core 10. The outer diameter of the cladding 20 is 80 µm or more and 130 µm or less. The primary coating 30 and the secondary coating 40 are comprised of an ultraviolet cured resin. The primary coating 30 surrounds the outer circumferential surface of the cladding 20 along the fiber axis AX. The secondary coating 40 surrounds the outer circumferential surface of the primary coating 30 along the fiber axis AX, and has elasticity higher than that of the primary coating 30. The outer diameter of the secondary coating 40 is 180 µm or more and 210 µm or less. If the outer diameter is smaller than 180 µm, a coating diameter sufficient to reduce microbending loss cannot be obtained. On the other hand, if the outer diameter is larger than 210 µm, the number of such fibers accommodated in a cable with the same diameter is 1.5 times or less the number of typical optical fibers with a diameter of 250 µm, and therefore the effect of reducing the diameter cannot be obtained.

The MFD of the optical fiber 1 at a wavelength of 1550 nm is 10 µm or more. The cable cutoff wavelength of the optical fiber 1 is longer than 1260 nm. The microbending loss of the optical fiber 1 at a wavelength of 1550 nm is 0.6 dB/km or less.

The microbending loss is measured by the mesh bobbin test defined in IEC TR62221 (see Non-Patent Document 1). In this measurement method, first, a mesh bobbin is prepared. The mesh bobbin is composed of a metal bobbin having a body diameter of 405 mm and a metal mesh wound around the metal bobbin. The metal mesh is obtained by braiding metal wires with a diameter of 50 µm at an interval of 150 µm. The transmission loss at a tension of 80 g and the transmission loss in a tension free state are measured by using the mesh bobbin having such a structure, and the microbending loss is determined from the difference between the measurements. The transmission loss at a tension of 80 g is a transmission loss measured in a state in which an optical fiber to be measured is wound around a mesh bobbin at a tension of 80 g. Furthermore, the transmission loss in the tension free state is a transmission loss measured in the tension free state with the optical fiber to be measured removed from the mesh bobbin. This measurement method is widely used as an evaluation method of microbending loss of optical fibers. Note that the shape of a mesh bobbin and the winding tension differing from the above-described typical values will be read and interpreted as microbending loss with the above-described typical values.

In the optical fiber 1 according to the present embodiment, the outer diameter of the secondary coating 40 is 210 µm or less (typically 200 ± 10 µm). As a result, the space density can be increased by 1.5 times as compared with a conventional typical optical fiber with a coating outer diameter of 250 ± 10 µm. Therefore, according to the present embodiment, it is possible to increase the amount of information that can be transmitted in a limited space such as submarine cables or underground conduits.

Furthermore, the nonlinearity of the optical fiber 1 is reduced by having an MFD of 10 µm or more (more preferably 11 µm or more, and further preferably 11.5 µm or more) at a wavelength of 1550 nm. Therefore, according to the present embodiment, it is possible to increase the transmission capacity per optical fiber in long haul transmission. However, when the MFD is 13 µm or more, the connection loss due to the MFD mismatch in the connection with the general-purpose single mode fiber is expected to be large.

In the optical fiber 1, the microbending loss may be large in a use environment, such as in an optical cable, due to the larger MFD and the smaller outer diameter of the secondary coating 40 than with the related art. However, in the optical fiber 1, the microbending loss is reduced by making the cable cutoff wavelength longer than 1260 nm.

The microbending loss of the optical fiber 1 is 0.6 dB/km or less at a wavelength of 1550 nm in the mesh bobbin test defined in IEC TR62221. This allows for installation in many typical optical cables.

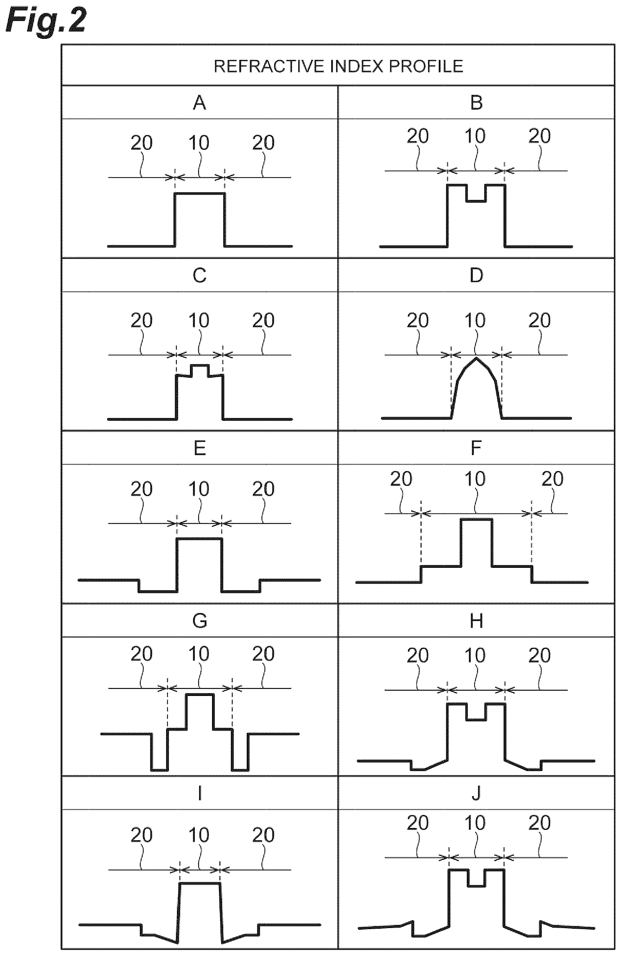

The optical fiber 1 may have any refractive index profile (refractive index profiles of type A to type J) as shown in Fig. 2, but preferably have a refractive index profile called W-shaped. With a W-shaped refractive index profile, such as type E, type G, type H, type I, and type J shown in Fig. 2, the cladding 20 includes the inner cladding 20A extending along the fiber axis while being adjacent to the core 10 and the outer cladding 20B extending along the fiber axis AX while surrounding the outer circumferential surface of the inner cladding 20A. The outer cladding 20B has a lower refractive index than the core 10, and the inner cladding 20A has a lower refractive index than the outer cladding 20B. An optical fiber having such a W-shaped refractive index profile can increase the MFD, lengthen the cable cutoff wavelength, and reduce microbending loss.

The refractive index profiles of type A to type J shown in Fig. 2 are the refractive index of each portion in the glass area (area constituted by the core 10 and the cladding 20) on line L (line orthogonal to the fiber axis AX) in Fig. 1. The cladding 20 may be composed of a single cladding region, as in type A to type D and type F, and may be composed of the inner cladding 20A and the outer cladding 20B having different refractive indexes, as in type E and type G to type J. In addition, the refractive index of the cladding 20 or of a plurality of regions constituting the cladding 20 may have a refractive index profile of any shape that changes in the radial direction from the core center (position intersecting with the fiber axis AX) as shown in type H to type J.

The refractive index difference between the inner cladding 20A and the outer cladding 20B is 0.04% or more (more preferably 0.08% or more). This configuration increases the bending loss in a higher order mode as compared to that in a fundamental mode, thus enabling compatibility between single mode operation and low macrobending loss. The outer diameter of the core 10 is preferably 10 to 20 µm. The outer diameter of the inner cladding 20A is preferably 2.5 to 4.0 times the outer diameter of the core 10. The outer diameter in the above-described range is preferable since the effect of reducing macrobending loss diminishes with an excessively small or large outer diameter of the inner cladding 20A.

The core 10 of the optical fiber 1 may be configured with a single core region, as in type A, type E, and type I, and may be configured with the inner core 10A (central core) and the outer core 10B (ring core) having different refractive indexes, as in type B, type C, type F, type G, type H, and type J. Even if the core 10 is configured with a single core region, as in type D, the core 10 may have an α-power refractive index profile with such a shape that the refractive index sharply decreases in the radial direction from the core center. For example, in the case of a ring-shaped refractive index profile, the core 10 is configured with the inner core 10A and the outer core 10B having a refractive index higher than that of the inner core 10A while surrounding the inner core 10A. Conversely, the core 10 may be configured with the inner core 10A and the outer core 10B having a lower refractive index than the inner core 10A while surrounding the inner core 10A. As described above, by increasing the layer structure of the cladding 20, by making the refractive indexes in the layer vary, or providing a trench structure, desirable optical characteristics such as a further lower microbending loss can be achieved. Examples of such structures are shown in Fig. 2 by type.

The optical fiber 1 according to the present embodiment has a thin outer diameter of 200 µm or less and a low microbending loss, so the number of cores in a cable can be increased. Therefore, the optical fiber 1 can be suitably used for large capacity transmission over a long haul. More preferable configurations of the optical fiber 1 are as follows.

By setting the thickness of the primary coating 30, having a relatively low elastic modulus, to 15 µm or more, the shielding effect of lateral pressure on the entire coating is enhanced. As a result, microbending loss is reduced. On the other hand, by setting the thickness of the secondary coating 40, having a relatively high elastic modulus, to 10 µm or more, it is possible to prevent the coating from being deformed excessively, leading to breakage, when lateral pressure is applied. Therefore, by setting the lower limits of the thicknesses of the primary coating 30 and the secondary coating 40 to the above values, even when the optical fiber 1 is placed in an operating environment where lateral pressure is applied, It is possible to reduce microbending loss and prevent breakage of the covering of the optical fiber 1. It is sufficient that the maximum thickness of the primary coating is 50 µm or less, and the maximum thickness of the secondary coating is 40 µm or less.

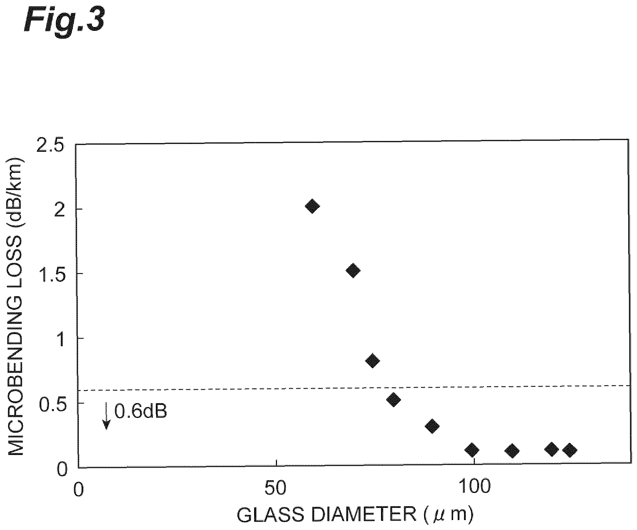

Fig. 3 is a graph showing the relationship between microbending loss and glass outer diameter. In the graph of Fig. 3, measurement values are plotted with the glass outer diameter varied in a state where the outer diameter of the optical fiber (the outer diameter of the secondary coating 40) is fixed at 200 µm. The thickness of the secondary coating 40 was 15 µm, the in situ elastic modulus of the primary coating 30 was 0.3 MPa, and the Young's modulus of the secondary coating 40 was 1000 MPa.

The in situ elastic modulus is measured in a pullout modulus test at a resin temperature of 23°C. Specifically, at one end of an optical fiber sample, a resin coating layer is cut with a razor or the like to cut off a part of the resin coating layer to expose a bared optical fiber. With the resin coating layer on the other end of the optical fiber sample fixed, the exposed portion of the bared optical fiber on the opposite side is pulled to elastically deform the primary coating that constitutes the resin coating layer. The amount of elastic deformation of the primary coating, the pulling force on the bared optical fiber, and the thickness of the primary coating provide the in situ elastic modulus of the primary coating. The test method is illustrated, for example, in Patent Document 3. The contents of Patent Document 3 are incorporated herein by reference as disclosure that constitutes a part of the present specification. When the in situ elastic modulus is measured by another method, it can be read and interpreted as a value obtained by the above method.

As shown in Fig. 3, when the glass outer diameter was less than 80 µm, a sharp increase in microbending loss occurred. On the other hand, when the glass outer diameter was 80 µm or more, microbending loss was able to be suppressed to 0.6 dB/km or less. In the range where the glass outer diameter was larger than 100 µm, microbending loss was 0.1 dB/km or less, which was too small to surpass the measurement limit. When the glass outer diameter was larger than 130 µm, the breaking strength with respect to the bending stress of the fiber dropped.

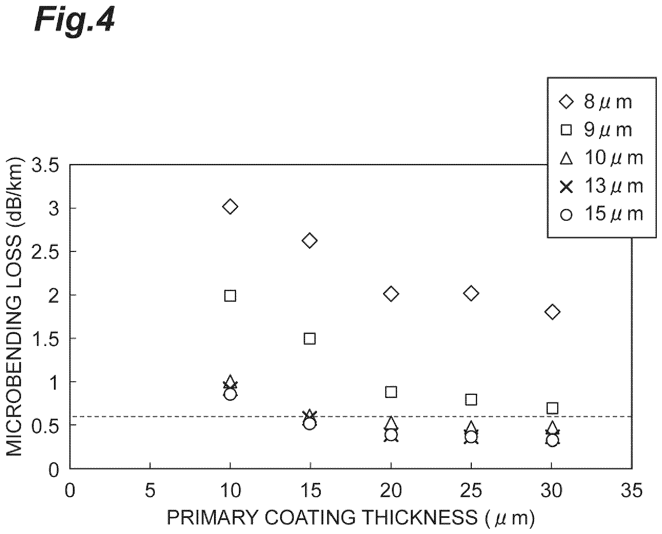

Fig. 4 is a graph showing the relationship between microbending loss and primary coating thickness. The glass outer diameter was set to 80 µm, and the thickness of the secondary coating 40 was set to 8 µm, 9 µm, 10 µm, 13 µm, and 15 µm. In Fig. 4, the symbols "◊" denote measured values of the sample with an 8-µm thick secondary coating 40, the symbols "□" denote measured values of the sample with a 9-µm thick secondary coating 40, the symbols "Δ" denote measured values of the sample with a 10-µm thick secondary coating 40, the symbols "×" denote measured values of the sample with a 13-µm thick secondary coating 40, and the symbols "○" denote measured values of the sample with a 15-µm thick secondary coating 40. As shown in Fig. 4, when the secondary coating 40 is thinner than 10 µm, even if the primary coating 30 is thickened to 30 µm, microbending loss of 0.6 dB/km or less cannot be achieved. However, when the thickness of the primary coating 30 is 50 µm or more, in the samples of the secondary coating 40 with an outer diameter of 200 µm, the minimum thickness 10 µm or more of the secondary coating 40 cannot be secured. If the primary coating 30 is excessively thick, the problem of easy deformation and breakage of the coating will occur. On the other hand, if the secondary coating 40 is thicker than 10 µm, some thicknesses of the primary coating 30 can provide good microbending properties. It is possible to achieve microbending loss of less than 0.6 dB/km when the primary coating 30 is thicker than 15 µm. In this case, when the secondary coating 40 is thicker than 10 µm, the microbending properties are not significantly affected. However, when the thickness of the secondary coating 40 is 45 µm or more, in the samples of the secondary coating 40 with an outer diameter of 200 µm, the minimum thickness 15 µm or more of the primary coating 30 cannot be secured.

In the optical fiber 1, the outer diameter of the cladding 20 is preferably 124 µm or more and 126 µm or less, the outer diameter of the primary coating 30 is preferably 156 µm or more and 180 µm or less, and the thickness of the primary coating 30 is preferably larger than the thickness of the secondary coating 40.

In the configuration in which the outer diameter of the cladding 20 is 125 µm and the outer diameter of the secondary coating 40 is 200 µm, when the outer diameter of the primary coating 30 is smaller than 155 µm, the thickness of the primary coating 30 is 15 µm or less. In this case, even if the coating Young's modulus was adjusted, the microbending loss generated in the mesh bobbin test failed to be reduced to 0.6 dB/km or less. A thicker primary coating 30 can better reduce lateral pressure loss, but when the outer diameter of the primary coating 30 is 180 µm or more, the thickness of the secondary coating 40 is 10 µm or less. In this configuration, the removability of the coating and the tensile strength decreased.

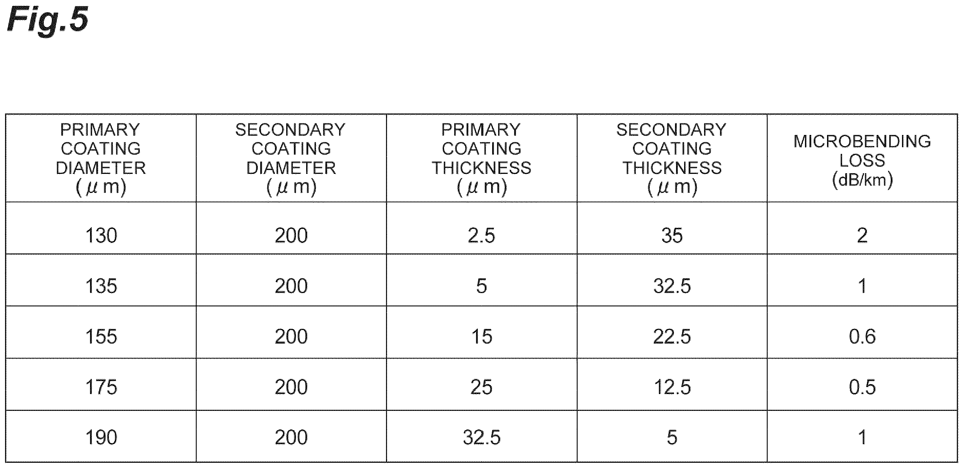

On the other hand, it is more desirable that the diameter of the primary coating 30 be larger than 155 µm, since the primary coating 30 with a larger thickness than the secondary coating 40 tends to lower the microbending loss generated in the mesh bobbin test. Fig. 5 is a table showing the tendency of microbending loss with respect to the diameters of the primary coating and the secondary coating when the glass diameter (the outer diameter of the bared optical fiber not including the coating layers) is 125 µm. The in situ elastic modulus of the primary coating 30 was 0.3 MPa, and the Young's modulus of the secondary coating 40 was 1000 MPa. Regarding the removability of the coating, when the outer diameter of the primary coating 30 was smaller than 155 µm, the removability of the coating was degraded, and adhesion of the coating was observed on the glass after the removal.

Furthermore, in the optical fiber 1, it is preferable that the core 10 be substantially free of GeO₂, that the concentration of transition metal impurities in the core 10 be zero or 1 mol ppb or less, and that typical values of transmission loss at a wavelength of 1550 nm be from 0.14 to 0.17 dB/km.

Since the core 10 is substantially free of GeO₂, the scattering loss derived from GeO₂ can be reduced, so that transmission loss at a wavelength of 1550 nm can be reduced. With the transmission loss reduced, the gain and the number of times of optical amplification are reduced in large capacity transmission over a long haul using an optical amplifier. The optical fiber according to the present embodiment has the effect of increasing the transmission capacity of the cable by increasing the number of fibers in the cable, but in that case, the power consumption of optical amplification becomes a problem. By reducing transmission loss and reducing the gain and the number of times of optical amplification, it is possible to realize large capacity transmission while suppressing an increase in power consumption.

In addition, the scattering loss reduced by the core 10 substantially free of GeO₂ is called Rayleigh scattering loss, and a component whose loss increases as the wavelength is shorter is its main component. Therefore, in the optical fiber to which the core 10 substantially free of GeO₂ is applied, loss of short wavelengths can be further reduced. The reduction in transmission loss of short wavelengths is also advantageous for amplification technology called Raman amplification used in large capacity transmission over a long haul. Generally, in Raman amplification, excitation light near 1450 nm, which is a shorter wavelength than the communication wavelength, is used. Therefore, reducing loss of short wavelengths is advantageous for large capacity transmission over a long haul. In an optical fiber substantially free of GeO₂ in the core 10, the transmission loss of 1450 nm can be reduced to 0.2 dB/km or less.

The core 10 may contain an alkali metal or an alkaline earth metal element such as Na, K, Rb, Cs, Be, Mg, or Ca at a concentration of 0.1 ppm or more and less than 300 ppm. Transmission loss of the optical fiber 1 can be thereby reduced.

In the optical fiber 1, the in situ elastic modulus of the primary coating 30 is preferably 0.7 MPa or less, and the Young's modulus of the secondary coating 40 is preferably 700 MPa or more. Furthermore, the in situ elastic modulus of the primary coating 30 is preferably 0.1 MPa or more and 0.3 MPa or less, and the Young's modulus of the secondary coating 40 is preferably 900 MPa or more. In addition, in consideration of temperature changes in an environment where the optical fiber 1 is installed, in a resin structure to which an ultraviolet cured resin having a glass-transmission temperature Tg of -60°C to - 40°C is applied as the primary coating 30, the Tg of the secondary coating 40 is preferably 60°C to 90°C.

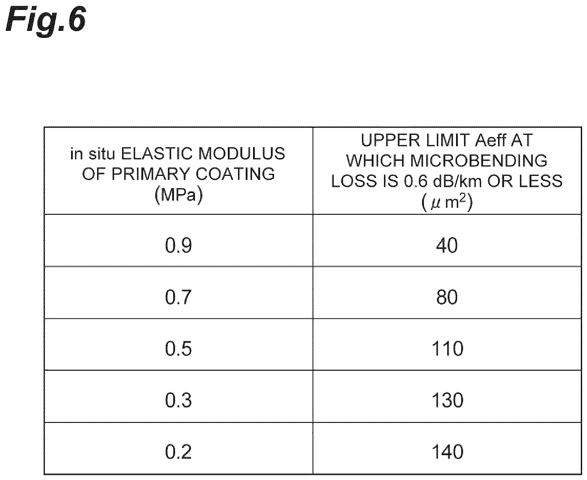

There is a correlation between the in situ elastic modulus of the primary coating 30 and microbending loss. That is, when the in situ elastic modulus of the primary coating 30 is lowered, the primary coating 30 is deformed due to the application of lateral pressure. This is because the increase in microbending loss generated by the bending of the glass can be effectively suppressed. There is also a correlation between the effective area (Aeff) and microbending loss. Fig. 6 is a table showing the relationship between the in situ elastic modulus of the primary coating and the upper limit Aeff at which the microbending loss is 0.6 dB/km or less. Here, the glass diameter is 125 µm, the diameter of the primary coating 30 is 165 µm, the diameter of the secondary coating 40 is 180 µm, and the Young's modulus of the secondary coating 40 is 1000 MPa.

For example, when the in situ elastic modulus of the primary coating 30 is lower than 0.7 MPa, Aeff can be expanded to 80 µm², which is equivalent to a general-purpose single mode fiber. Since microbending loss tends to become stronger with a larger coating diameter, it is considered that the microbending loss is 0.6 dB/km or less if the above-described upper limit Aeff is satisfied. The in situ elastic modulus is preferably 0.05 MPa or more. When the in situ elastic modulus is lower than 0.05 MPa, it is considered that the coating is torn when an external force is applied and air bubbles are easily generated.

The secondary coating 40 having a larger Young's modulus can better reduce microbending loss. However, in a state where the Young's modulus of the secondary coating 40 is larger than 1200 MPa, voids are generated due to a large stress generated in the primary coating 30 when the optical fiber is crushed by lateral pressure. Furthermore, when the voids generated in the primary coating 30 are enlarged due to a heat cycle, the glass may be bent to cause microbending loss. Therefore, high manufacturability can be achieved by suppressing the Young's modulus of the secondary coating 40 to 1200 MPa or less.

It is necessary to reduce the Young's modulus of the primary coating 30 in order to provide the primary coating 30 with lateral pressure resistance. However, in the technology described in Patent Document 1, it is necessary to reduce the Young's modulus of the primary coating of the optical fiber by increasing the oligomer molecular weight. However, in that case, the toughness is lowered and a tensile force causes irreversible breakage of polymer chains in the resin. The buildup of breakage in the polymer chains causes a problem of void generation. Such voids will deteriorate the transmission loss at low temperature.

Therefore, the primary coating 30 is preferably formed by curing a curable resin composition containing an oligomer, a monomer, and a reaction initiator. In addition, the in situ elastic modulus of the primary coating 30 can be reduced by the method of containing 30% by mass or more of one-terminal non-reactive oligomers or both-terminal non-reactive oligomers relative to the total amount of oligomers in the resin raw material of the primary coating 30.

More preferably, the optical fiber 1 according to the present embodiment has the following configuration. That is, the effective area (Aeff) of the optical fiber 1 is preferably 80 µm² or more, more preferably 110 µm² or more, and still more preferably 130 µm² or more. In the related art, many long haul transmissions using optical fibers having an Aeff of 80 µm², 110 µm², and 130 µm² have already been laid. Therefore, by having an Aeff compatible with them, it becomes possible to reuse interconnections and system design, and to reduce the operation cost of the network.

Furthermore, the cable cutoff wavelength of the optical fiber 1 is desirably shorter than 1530 nm. This makes it possible to suppress high-order mode noises when signal light is propagated to the core in an amplification wavelength band of 1530 nm to 1625 nm of an erbium-doped optical fiber amplifier (EDFA).

In addition, in the optical fiber 1 according to the present embodiment, it is preferable that the core be substantially free of GeO₂ and have the α-th power parameter larger than 10 to reduce the influence of waveguide dispersion, so that a wavelength dispersion larger than +20 ps/nm/km can be achieved at a wavelength of 1550 nm. Small-diameter optical fibers are more likely to generate microbending loss than standard optical fibers. Therefore, although the expansion of the effective area is limited (nonlinear noises are more likely to occur), it is possible to reduce nonlinear noises by making the wavelength dispersion larger than +20 ps/nm/km.

In the optical fiber 1 according to the present embodiment, the core is preferably substantially free of GeO₂ and contains F, so that a group refractive index smaller than 1.464 can be achieved at a wavelength of 1550 nm. Small-diameter optical fiber are more flexible than standard optical fibers and tend to meander in an optical cable (physical optical path length per cable unit length tends to be long), which can cause the problem of delay of optical signal transmission (latency). However, the effect of latency can be reduced by keeping the group refractive index lower than 1.464.

Furthermore, it is desirable that the coating of the optical fiber 1 according to the present embodiment has an identification portion intermittently arranged along the fiber axis and having a color that can be visually recognized by the naked eyes. Small-diameter optical fibers are more difficult to view than standard optical fibers and to identify the color imparted to the optical fiber coating. This may cause reduction in the workability in connection work in installing optical cables. However, by providing the intermittent identification part in the optical fiber 1 along the fiber axis AX, high visibility can be obtained, and connection work can be easily performed.

### Reference Signs List

1 ... Optical fiber; 10 ... Core; 10A ... Inner core; 10B... Outer core; 20 ... Cladding; 20A ... Inner cladding; 20B ... Outer cladding; 30 ... Primary coating; and 40 ... Secondary coating.

## Claims

1. An optical fiber comprising:
a core extending along a fiber axis and comprised of silica glass;
a cladding extending along the fiber axis while surrounding the core and comprised of silica glass, the cladding having a refractive index lower than that of the core, and having an outer diameter of 80 µm or more and 130 µm or less on a cross section of the optical fiber orthogonal to the fiber axis;
a primary coating extending along the fiber axis while surrounding the cladding and comprised of an ultraviolet cured resin; and
a secondary coating extending along the fiber axis while surrounding the primary coating and comprised of an ultraviolet cured resin having elasticity higher than that of the primary coating, the secondary coating having an outer diameter of 180 µm or more and 210 µm or less on the cross section,
the optical fiber having:
a mode field diameter of 10 µm or more and 13 µm or less at a wavelength of 1550 nm;
a cable cutoff wavelength longer than 1260 nm; and
a microbending loss, measured by a mesh bobbin test defined in IEC TR62221, of 0.6 dB/km or less at a wavelength of 1550 nm.

2. The optical fiber according to claim 1, wherein
the primary coating has a thickness of 15 µm or more and 50 µm or less on the cross section, and
the secondary coating has a thickness of 10 µm or more and 40 µm or less on the cross section.

3. The optical fiber according to claim 1 or 2, wherein
the primary coating has an in situ elastic modulus of 0.05 MPa or more and 0.7 MPa or less, and
the secondary coating has a Young's modulus of 700 MPa or more and 1200 MPa or less.

4. The optical fiber according to any one of claims 1 to 3, wherein
the primary coating has an in situ elastic modulus of 0.1 MPa or more and 0.3 MPa or less, and
the secondary coating has a Young's modulus of 900 MPa or more and 1200 MPa or less.

5. The optical fiber according to any one of claims 1 to 4, wherein
the core is substantially free of GeO₂,
a concentration of transition metal impurities contained in the core is zero or 1 mol ppb or less, and
the optical fiber has a transmission loss of lower than 0.17 dB/km at a wavelength of 1550 nm.

6. The optical fiber according to any one of claims 1 to 5, wherein
on the cross section, the cladding has the outer diameter of 124 µm or more and 126 µm or less,
on the cross section, the primary coating has an outer diameter of 156 µm or more and 180 µm or less, and
on the cross section, the primary coating has a thickness of larger than a thickness of the secondary coating.

7. The optical fiber according to any one of claims 1 to 6, wherein
the cladding includes an inner cladding extending along the fiber axis while being adjacent to the core and an outer cladding extending along the fiber axis while surrounding the inner cladding,
the outer cladding has a refractive index lower than that of the core, and
the inner cladding has a refractive index lower than that of the outer cladding.

8. The optical fiber according to any one of claims 1 to 7, wherein
the secondary coating has a glass-transmission temperature Tg of from 60°C to 90°C.
